**Europäisches Patentamt**

**European Patent Office**

**Office européen des brevets**

(19)

(11) Publication number : **0 301 013 B1**

(12) # EUROPEAN PATENT SPECIFICATION

(45) Date of publication of patent specification :
22.01.92 Bulletin 92/04

(51) Int. Cl.⁵ : **B66F 9/00, B66F 9/065**

(21) Application number : **87902183.0**

(22) Date of filing : **30.03.87**

(86) International application number :
**PCT/SE87/00161**

(87) International publication number :
**WO 87/05889 08.10.87 Gazette 87/22**

(54) **AUXILIARY WHEEL HOLDER.**

(30) Priority : **02.04.86 SE 8601475**

(43) Date of publication of application :
**01.02.89 Bulletin 89/05**

(45) Publication of the grant of the patent :
**22.01.92 Bulletin 92/04**

(84) Designated Contracting States :
**DE FR GB IT NL**

(56) References cited :
**CH-A- 442 147**
**SE-B- 420 401**
**SE-C- 138 933**
**SE-C- 172 996**
**US-A- 3 143 358**

(73) Proprietor : **RYTTERSSON, Ove**
**Östra Annebergsvägen 17**
**S-433 37 Partille (SE)**

(72) Inventor : **RYTTERSSON, Ove**
**Östra Annebergsvägen 17**
**S-433 37 Partille (SE)**

(74) Representative : **Franzén, Lars Hjalmar et al**
**AWAPATENT AB Box 5117**
**S-200 71 Malmö (SE)**

Jouve, 18, rue Saint-Denis, 75001 PARIS

## Description

All pallet trucks manufactured in Europe are completely adapted to European pallet standard. This means, among other things, that the wheels mounted underneath the lifting fork of the truck have, for consideration of space, a very small wheel diameter which may amount maximally to 85 mm, because of the ground clearance of the pallet which is about 100 mm.

In actual practice, this limited size of the radius of rotation of the fork wheels means that the mobility of the pallet truck in the horizontal plane is reduced considerably and frequently directly obstructed already by insignificant irregularities in the base on which the truck is moved. Such irregularities may be in the form of small stones on a gravel surface, thresholds, or the surface of a floor grating. A further obstacle to heavily loaded small diameter wheels is a substrate which is too soft, for example sand. Also mattings of different types must be regarded as such a soft substrate.

From US-A-3 143 358 is known a specially designed pallet truck with permanently installed (integrated) extra wheels. These extra wheels are folded between respectively inner and outer horizontal and vertical positions in a manner rather similar to that of the landing gears on aeroplanes, whith the aid of several moving parts comprising an actuating linkage system.

The present invention aims at greatly reducing the rolling resistance of the small fork wheels by replacing these wheels in a simple manner by far larger and broader wheels mounted as a unit in a detachable separate auxiliary wheel holder.

The invention thus concerns a separate auxiliary wheel holder for connection to pallet trucks, said pallet trucks being of the type having lifting forks and fork wheels foldably mounted thereon. The invention is characterized in that at least two auxiliary wheels having a larger radius of rotation than said fork wheels are mutually and freely mounted on a common axle, which is fixed to several support arms, the mutual spacing of which is determined by a cross bar, so that the support arms with fittings are detachably inserted, surrounded or in any other way connectible to the outer parts of said lifting forks.

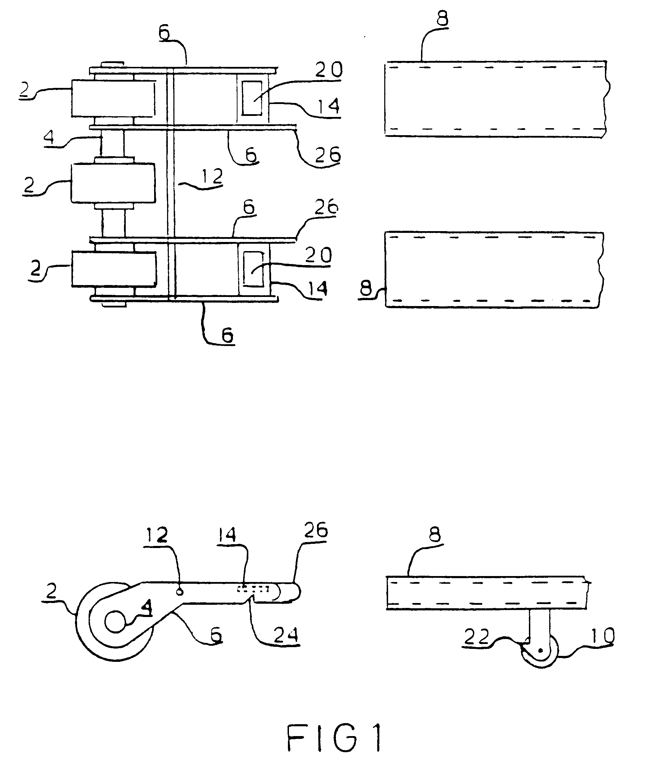

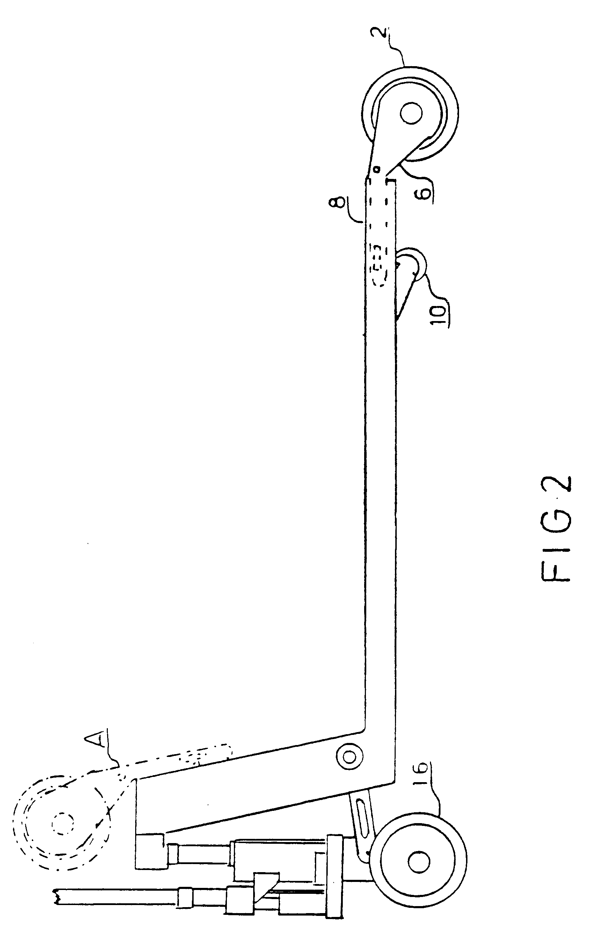

One embodiment of such an auxiliary wheel holder is shown in the accompanying drawings in which Fig. 1 illustrates from above and from the side the auxiliary wheel holder before it is connected to a but partly shown pallet truck, and Fig. 2 is a lateral view of the pallet truck with the auxiliary wheel holder connected thereto.

The separate auxiliary wheel holder according to the invention and illustrated in the drawings comprises three large transport or auxiliary wheels 2 which are independently and freely rotatable on a common axle 4 which in turn is mounted or secured in a frame 6. The frame comprises four support arms 6 designed such that they can be manually inserted into the open outer parts of the truck lifting forks.

In order to fix the mutual positions and spacings of all juxtaposed support arms 6, there is provided, in addition to the axle 4, a cross bar 12 extending through all of the support arms. A smaller cross bar 14 is used for pairwise fixing of said support arms. The smaller cross bar 14 may be provided with a recess 20 for accommodating fork wheels 10 foldably mounted on the lifting forks and adapted, in folded-up position, to be inserted in order to lock the auxiliary wheel holder. Alternatively, the auxiliary wheel holder may be locked by means of a locking hook 22 provided on the attachment of the fork wheels 10. The hook 22 fits into a recess 24 in the support arms 6 of the auxiliary wheel holder.

The auxiliary wheel holder is mounted in the following manner. The pallet truck is pushed underneath a pallet with the fork wheels 10 in folded-up position. Then the pallet truck is pumped with the pallet and the load to maximum heigth, whereby steering wheels 16 and the fork wheels 10 are subjected to load. The support arms 6 of the auxiliary wheel holder are inserted into the outer parts 8 of the lifting forks, and the forks are lowered so that the weight of the load on the fork wheels 10 is transferred to the auxiliary wheels 2. The fork wheels 10 are folded up to lock the support arm 6, whereupon the goods can be transported by means of the auxiliary wheels 2. To remove the auxiliary wheel holder, the procedure is the reverse. To facilitate insertion of the auxiliary wheel holder, two of the support arms 6 are slightly extended at 26.

Fig. 2 illustrates the auxiliary wheel holder inserted in the outer parts 8 of the forks of the pallet truck, with folded-up fork wheels 10 and ready for use. When the auxiliary wheel holder is not used, it is stored in the manner illustrated by the dash-dot lines A in Fig. 2.

The above description imposes no restriction on the basic idea of the invention. For example, the support arms 6 may be designed to completely or partly encompass the outer parts 8 of the lifting forks of the pallet truck, instead of being inserted therein. The support arms 6 can cooperate with guide and locking means mounted on the outer or inner side of the outer parts 8 of the lifting forks. Furthermore, the auxiliary wheels 2 may have a dimension which, to a varying degree, is greater or smaller than the dimension of the steering wheels 16 of the pallet truck.

One of the advantages of the auxiliary wheel holder according to the invention is that it can be moved between and used with different standard type pallet trucks, which brings not only economic advantages in terms of a small number of auxiliary wheel holders for many pallet trucks and few or no modifications of the trucks themselves, but also considerable freedom of use and less maintenance.

Because of its construction, the auxiliary wheel holder according to the invention also imposes no restrictions, naturally within reasonable limits, upon the diameter, width and other construction details of the auxiliary wheels 2.

A further advantage is that the auxiliary wheel holder enables the fork wheels 10 and the auxiliary wheels 2 to "collaborate" when passing over obstacles such as tresholds etc. by alternating the load on the respective set of wheels, such that one set of wheels can be moved past or over the obstacle before or after the other set.

## Claims

1. A separate auxiliary wheel holder for connection to pallet trucks, said pallet trucks being of the type having lifting forks and fork wheels (10) foldably mounted thereon, **characterised** in that at least two auxiliary wheels (2) having a larger radius of rotation than said fork wheels (10) are mutually and freely mounted on a common axle (4), which is fixed to several support arms (6), the mutual spacing of which is determined by a cross bar (12), so that the support arms (6) with fittings (2, 4, 12) are detachably inserted, surrounded or in any other way connectible to the outer parts (8) of said lifting forks.

2. A separate auxiliary wheel holder as claimed in claim 1, **characterised** in that the fixed support arms (6) on the outer parts (8) of said lifting forks are lockable thereon, partly under the action of said fork wheels (10) in folded-up position and partly by one for the purpose suitable hook (22).

## Patentansprüche

1. Separater Hilfsradträger für Palettenhubwagen desjenigen Typs, der Gabeln und daran montierte, klappbare Gabelräder (10) umfasst, dadurch **gekennzeichnet**, dass zumindest zwei Hilfsräder (2) mit grösserem Umlaufhalbmesser als die Gabelräder (10) an einer gemeinsamen Achse (4) gegenseitig freilaufend gelagert sind, welche an mehreren Tragarmen (6) befestigt ist, deren Abstand voneinander von einer Querstange (12) bestimmt ist, so dass die Tragarme (6) mit zugehörigen Teilen (2, 4, 12) in die Aussenteile (8) der Gabeln lösbar eingesteckt, von ihnen umschlossen oder auf andere Art mit ihnen verbindbar sind.

2. Separater Hilfsradträger nach Anspruch 1, dadurch **gekennzeichnet**, dass die an den Aussenteilen (8) der Gabeln befestigten Tragarme (6) teils durch die Einwirkung der Gabelräder (10) in deren hochgeklappter Position, teils mittels eines hierfür geeigneten Hakens (22) an den Aussenteilen feststellbar sind.

## Revendications

1. Porte-roues auxiliaires séparé destiné à être fixé à des chariots porte-palettes, lesdits chariots porte-palettes étant du type comportant des fourches de levage sur lesquelles sont montées de manière repliable des roues de fourche (10), caractérisé en ce qu'au moins deux roues auxiliaires (2) ayant un rayon de rotation supérieur à celui desdites roues de fourche (10) sont montées mutuellement et librement sur un axe commun (4) qui est fixé à plusieurs bras de support (6), dont l'écartement mutuel est déterminé par une barre transversale (12), de sorte que les bras de support (6) munis des éléments (2, 4, 12) sont insérés sur les parties externes (8) desdites fourches de levage, entourés par celles-ci ou susceptibles d'être reliés à celles-ci de toute autre façon, de manière détachable.

2. Porte-roues auxiliaires séparé selon la revendication 1, caractérisé en ce que les bras de support fixes (6) sur les parties externes (8) desdites fourches de levage sont verrouillables sur celles-ci en partie sous l'action desdites roues de fourche (10) en position repliée et en partie par un crochet (22) approprié à cet effet.

FIG 1

FIG 2